# EUROPEAN PATENT APPLICATION

(11) **EP 4 804 363 A1**
(43) Date of publication of application: **09.09.2026**
(21) Application number: 25161961.5
(22) Date of filing: 05.03.2025
(51) Int. Cl.: H02J 3/00, H02J 3/36

(54) **IMPROVEMENTS RELATING TO THE CONTROL OF BIPOLE POWER TRANSMISSION NETWORKS**

(71) Applicant: GE Vernova Technology GmbH, 5400 Baden (CH)
(72) Inventor: KUMAR, Amit, SST16 1WS Stafford (GB); JASIM, Omar, ST16 1WS Stafford (GB)
(74) Representative: Openshaw & Co.

(57) **Abstract**

There is provided a computer-implemented method (600) of controlling a bipole power transmission network, the method comprising: receiving (610) an indication of a disturbance in a first AC system; and then controlling (620) first and second power converters of the bipole power transmission network to provide substantially the same active power at their respective first and second AC sides.

## Description

### Field

The subject matter herein relates generally to the field of power transmission networks and more specifically to the control of bipole power transmission networks.

### Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

### Summary

In bipole power transmission networks, such as HVDC power transmission networks, the two electrical poles of the bipole may be fed by independent power generation systems. For example, the two electrical poles may be fed by different offshore wind power parks. The different wind power parks may experience different wind densities, which tends to result in different powers being fed to the two electrical poles of the power transmission network. The difference in fed power between the electrical poles can result in an unbalanced electrical current in the power transmission network. This unbalanced current tends to flow through a dedicated metallic return (DMR) conductor of a neutral arrangement in the DC circuit of the power transmission network.

A bipole power transmission network may experience fault conditions. These fault conditions may include fault conditions through which the power transmission network is expected to 'ride through'. The 'ride through' fault conditions may arise owing to a disturbance within an AC system to which the AC:DC converters of the power transmission network are connected. For example, an AC ride-through fault condition may arise within an onshore AC system to which an onshore converter station of the power transmission network is connected. Upon detection of the fault or disturbance, the AC:DC converters of the onshore converter station may be operated independently of each other and based on their respective point of common connection (PCC) measured AC voltage at the onshore AC system. Owing to this independent operation, the DC currents on the DC electrical poles of the power transmission network may not be equal. As a result, the unbalanced current may be allowed to flow through the DMR conductor. In this scenario, a fault or disturbance as referred to herein may generally be considered to correspond to a difference in impedance between the PCC of each converter to the AC system at the onshore side of the power transmission network.

In some scenarios the DMR conductor may itself be damaged or faulty. Accordingly, there may not be a return path available in the neutral arrangement for unbalanced current to flow. The power transmission network may accordingly be required to be switched into either a rigid bipole configuration or a bipole with both converter stations (onshore and offshore, for instance) grounded. In either configuration, it is desirable to reduce any unbalanced current to zero (for instance, to avoid current flowing to ground). This tends to necessitate a current balancing operation to be performed between the two electrical poles of the power transmission network. This is the case for both steady state operation of the power transmission network, and during temporal events (i.e., AC ride through faults).

Generally, as described above, for bipole schemes the AC:DC converters are operated independently for each electrical pole in response to determining an AC system fault. However, where both converter stations (i.e., onshore and offshore) are grounded, or where a single converter station is grounded, an unbalanced electrical current can still arise owing to the operation of dynamic braking systems (DBS) connected to the electrical poles. This is because, owing to the independent operation of the power converters, one electrical pole converter (observing the fault) at the onshore side will not be able to continue to feed power to the AC system owing to the fault at the AC system, whereas the other converter (not observing the fault) may still be able to continue to feed power. Accordingly, a DBS on one pole may be triggered to operate to dissipate excess energy, whereas the other DBS on the other pole may not. Where one converter station is grounded this can lead to a neutral overvoltage at the ungrounded converter station, damaging equipment such as surge arrestors. Where both stations are grounded, this can result in an unbalanced DC current flowing towards the neutral arrangement and in circumstances where there is no return path (i.e., no DMR), to ground. This tends to have undesirable environmental consequences. Furthermore, such an unbalanced current can damage components such as surge arrestors or even trip the entire power transmission network.

Accordingly, it is desirable to provide a computer-implemented method, controller and bipole power transmission network that mitigates these issues.

According to a first aspect, there is provided a computer-implemented method of controlling a bipole power transmission network, the bipole power transmission network comprising a first power conversion means comprising first and second power converters having respective first and second alternating current (AC) sides and respective first and second direct current (DC) sides, a second power conversion means comprising third and fourth power converters having respective third and fourth AC sides and respective third and fourth DC sides, a first power transmission means electrically connected between the first and third DC sides and defining a first electrical pole having a first DC current and a first DC voltage, a second power transmission means electrically connected between the second and fourth DC sides and defining a second electrical pole having a second DC current and a second DC voltage, wherein the first and second AC sides are connected to a first AC system, wherein the third and fourth AC sides are connected to a second AC system, the method comprising: receiving an indication of a disturbance in the first AC system; and then controlling the first and second power converters to provide substantially the same active power at their respective first and second AC sides.

Generally, the disclosure herein introduces a function to operate the first and second power converters of the first and second electrical poles in a coordinated manner during AC fault ride through events, and a logic to optionally select this function based on a change in the DC circuit configuration.

For configurations where unbalanced current between first and second electrical poles is allowed, the operation of the first and second power converters during disturbances (i.e., AC fault ride through) may be independent (for instance, based on their respective PCC AC voltage measured in the first AC system). The unbalanced current is permitted to flow through the neutral arrangement via a return path.

However, the disclosure herein further provides for control of the first and second power converters in a coordinated manner for configurations where unbalanced current between the two electrical poles is undesirable.

More specifically, the inventors have found that by controlling the first and second power converters to provide substantially the same active power, the first and second DC currents of the respective first and second electrical poles can be regulated to be substantially the same as each other. Accordingly, the electrical currents flowing in the first and second electrical poles tend to be substantially the same and the unbalanced DC current flowing, for instance, to the neutral arrangement is substantially zero. The inventors have found that by controlling a bipole power transmission network in this manner, in response to determining a disturbance in the first AC system, the unbalanced current can be mitigated. This is particularly desirable where there is no return path available in a neutral arrangement of the bipole power transmission network (i.e., a DMR conductor being faulty or out of service) and any unbalanced DC current would otherwise flow undesirably to ground.

The approach described herein tends to increase the availability of the power transmission scheme, mitigating the risk of the scheme being tripped. Furthermore, the risk of damage to electrical components such as surge arrestors on the neutral arrangement tends to be mitigated, and the risk of electrical current flowing to ground and the associated environmental issues tends to be avoided.

The first AC system may comprise first and second AC networks. The first AC system may be a single network with different impedances. The second AC system may comprise third and fourth AC networks. The second AC system may be a single network with different impedances.

The bipole power transmission network may comprise a first dynamic braking system (DBS) connected to the first electrical pole, the first DBS being responsive to the first DC voltage exceeding a threshold voltage. The bipole power transmission network may further comprise a second DBS connected to the second electrical pole, the second DBS being responsive to the second DC voltage exceeding the threshold voltage. Such that the step of controlling the first and second power converters coordinates the operation of the first DBS and the second DBS by coordinating the active power of the first and second power converters.

The disclosure herein tends also to provide a method of coordinated control wherein the converters themselves are controlled rather than the DBS of the bipole power transmission network. The DBS instead tends to naturally activate as a result of the rise in DC voltage level on the respective electrical poles. It follows, that by controlling the first and second power converters to provide substantially the same active power, the DC voltages on the first and second electrical pole will consequently change in a coordinated and similar manner. Hence the respective DBS systems for the first and second electrical poles will activate naturally in a coordinated and similar manner, with no need for direct control.

The step of receiving the indication of the disturbance in the first AC system may comprise at least one of: receiving a measurement of an AC electrical quantity (such as an AC voltage and/or current) of the first AC system; and receiving an external power control signal .

The disturbance may be a directly measured or sensed fault. In some instances, the disturbance may instead be indicated via the power control signal (for instance where direct measurement of the fault is not made or not possible). The power control signal may be an emergency power signal, for instance, from a grid level controller.

The step of controlling the first and second power converters may comprise: determining a common reference for controlling the first and second power converters; and providing, to the first and second power converters, the common reference.

The step of controlling the first and second power converters may further comprise: receiving, from a controller of the first power converter, a first reference for controlling the first power converter; receiving, from a controller of the second power converter, a second reference for controlling the second power converter; selecting, from the first reference and the second reference, a selected reference, wherein the selected reference is the lower of the first reference and the second reference; and providing, to the first and second power converters, the selected reference as the common reference for controlling the first and second power converters.

By selecting the minimum or lower of the first reference and second reference as the common reference, the overall effect tends to be the driving of the active electrical currents on the first and second electrical poles to be substantially the same. Expressed differently, the 'worst case' of the references is selected and used to coordinate the operation of the first and second power converters.

The common reference may comprise: an active current reference; or a magnitude and phase angle.

The active current reference may be used for grid following configurations. The magnitude and phase angle may be used for synchronous grid forming (SGFM) configurations.

The bipole power transmission network may comprise a neutral arrangement connected to the first, second, third and fourth DC sides, wherein the step of controlling the first and second power converters may further comprise: determining a third DC current in the neutral arrangement; generating, based on the third DC current, a first trimming signal for combining with the common reference to regulate the third DC current substantially to zero; and combining the first trimming signal with the common reference for providing to the first and second power converters.

By controlling the first and second power converters using the same reference, the DC currents on the first and second electrical poles may resultantly be substantially similar enough to regulate the third DC current acceptably close to zero. However, to further improve the regulation the first trimming signal may also be introduced. The first trimming signal tends to improve the quality of the regulation of the third DC current to zero.

The step of determining the third DC current in the neutral arrangement may comprise: measuring the third DC current; or measuring the first and second DC currents of the first electrical pole and second electrical pole, and determining the third DC current in the neutral arrangement as the difference between the first and second DC currents.

The third DC current may be a direct measurement of DC current in the neutral arrangement, for instance in a ground path or through a surge arrestor, for instance. Alternatively, the third DC current can be indirectly determined by measuring and calculating the difference between the first and second DC currents of the respective electrical poles.

The controlling the first and second power converters may alternatively comprise: generating, based on the first DC voltage of the first electrical pole and/or the second DC voltage of the second electrical pole, a second trimming signal for combining with the common reference to regulate a difference between the first DC voltage and the second DC voltage substantially to zero; and combining the second trimming signal with the common reference for providing to the first and second power converters. This approach tends to be advantageous where only a single converter station of the bipole power transmission network is grounded. The control methodology tends to generate the second trimming signal as a function of DC voltage drift.

The second AC system may be a power generation network, optionally a renewable power generation network, optionally one or more windfarms.

The first power conversion means may comprise an onshore converter station and the second power conversion means may comprise an offshore converter station.

During a fault condition, generally, the offshore converter station tends to be operated with a control methodology whereby bus sectionalisers at the second AC system are closed and power is fed equally to each offshore power converter. Accordingly, the control methodology described herein tends to be more advantageously applicable to the onshore converter station. If a fault or disturbance occurs at the first AC system (the onshore AC system) that requires a reduction in power for one of the electrical poles, the reduction in power may drive unbalanced current flowing towards the neutral arrangement. Instead, as described herein, in such a scenario the power converters of both electrical poles at the onshore converter station are coordinated to mitigate unbalanced current (which may otherwise flow in the neutral arrangement/to ground during transient fault conditions).

The power transmission network may be a high voltage DC, HVDC, power transmission network.

The method may comprise: determining a status of a switchgear of the neutral arrangement; and then if the status indicates the switchgear is open, controlling the first and second power converters to provide substantially the same active power at their respective first and second AC sides.

For the configurations where the unbalanced current between the two electrical poles is not desirable, then selection logic based on the state of switchgear (i.e., in the neutral arrangement) may be used to select the proposed function, which allows for a coordinated operation of the power converters of the two poles during AC fault ride through, with the objective of minimizing the difference in DC current between the two electrical poles to close to a threshold value i.e., to zero. The switchgear may be the switchgear associated with the DMR conductor of the neutral arrangement, for instance.

According to a second aspect, there is provided a controller for controlling a bipole power transmission network, the bipole power transmission network comprising a first power conversion means comprising first and second power converters having respective first and second AC sides and respective first and second DC sides, a second power conversion means comprising third and fourth power converters having respective third and fourth AC sides and respective third and fourth DC sides, a first power transmission means electrically connected between the first and third DC sides and defining a first electrical pole having a first DC voltage and a first DC current, a second power transmission means electrically connected between the second and fourth DC sides and defining a second electrical pole having a second DC voltage and a second DC current, wherein the first and second AC sides are connected to a first AC system, wherein the third and fourth AC sides are connected to a second AC system, the controller comprising: a memory; and at least one processor; wherein the memory comprises computer-readable instructions which when executed by the at least one processor cause the controller to: receive an indication of a disturbance in the first AC system; and then control the first and second power converters to provide substantially the same active power at their respective first and second AC sides.

The controller may be a controller for the bipole power transmission network. The controller may be a controller for both electrical poles. The controller may be implemented for each power converter of each electrical pole.

According to a third aspect, there is provided a bipole power transmission network comprising: a first power conversion means comprising first and second power converters having respective first and second AC sides and respective first and second DC sides; a second power conversion means comprising third and fourth power converters having respective third and fourth AC sides and respective third and fourth DC sides; a first power transmission means electrically connected between the first and third DC sides and defining a first electrical pole having a first DC voltage and a first DC current; a second power transmission means electrically connected between the second and fourth DC sides and defining a second electrical pole having a second DC voltage and a second DC current; wherein the first and second AC sides are connected to a first AC system; wherein the third and fourth AC sides are connected to a second AC system; and the controller of the second aspect.

The bipole power transmission network may comprise: a first DBS connected to the first electrical pole, the first DBS being responsive to the first DC voltage exceeding a threshold voltage; a second DBS connected to the second electrical pole, the second DBS being responsive to the second DC voltage exceeding the threshold voltage; such that in use the controller being caused to control the first and second power converters, coordinates the operation of the first DBS and the second DBS by coordinating the active power of the first and second power converters.

According to a fourth aspect, there is provided a computer program comprising instructions which when executed by a processor of a controller for a bipole power transmission network, cause the controller to perform the method of the first aspect.

According to a fifth aspect of the invention, there is provided a non-transitory computer-readable storage medium comprising the computer program of the fourth aspect.

It will be appreciated that particular features of different aspects share the technical effects and benefits of corresponding features of other aspects of the invention. More specifically, the controller, bipole power transmission network, computer program, non-transitory computer-readable medium, share the technical effects and benefits of the computer-implemented method.

It will also be appreciated that the use of the terms "first" and "second", and the like, are merely intended to help distinguish between similar features and are not intended to indicate a relative importance of one feature over another, unless otherwise specified. Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

The invention will now be described by way of example only and with reference to the accompanying drawings, in which:
Figure 1 shows generically, an example of a power transmission network in accordance with aspects of the present disclosure;
Figure 2 shows an example of a controller for a bipole power transmission network in accordance with aspects of the present disclosure;
Figure 3 shows an example of a bipole power transmission network in accordance with aspects of the present disclosure;
Figure 4 shows an example of part of the circuitry for a rigid bipole power transmission network in accordance with aspects of the present disclosure;
Figure 5 shows an example of control logic for a controller of a bipole power transmission network with both converter stations grounded, in accordance with aspects of the present disclosure;
Figure 6 shows an example of a method of controlling a bipole power transmission network in accordance with aspects of the present disclosure;
Figure 7 shows an example of control logic for a controller of a bipole power transmission network with one converter station grounded, in accordance with aspects of the present disclosure.

### Detailed description

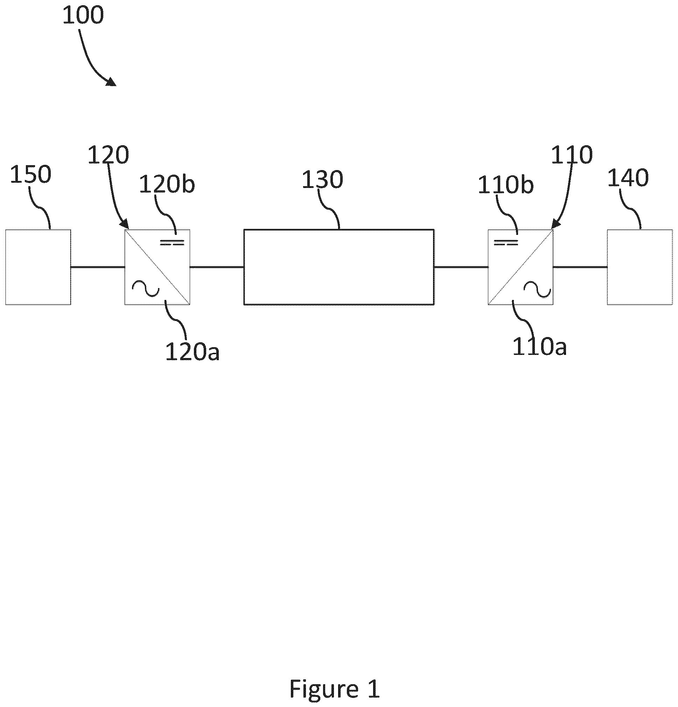

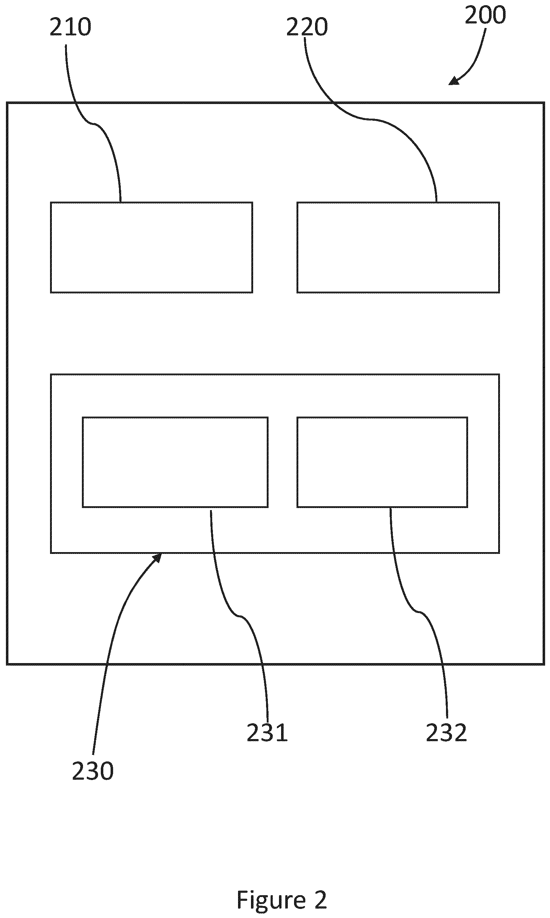

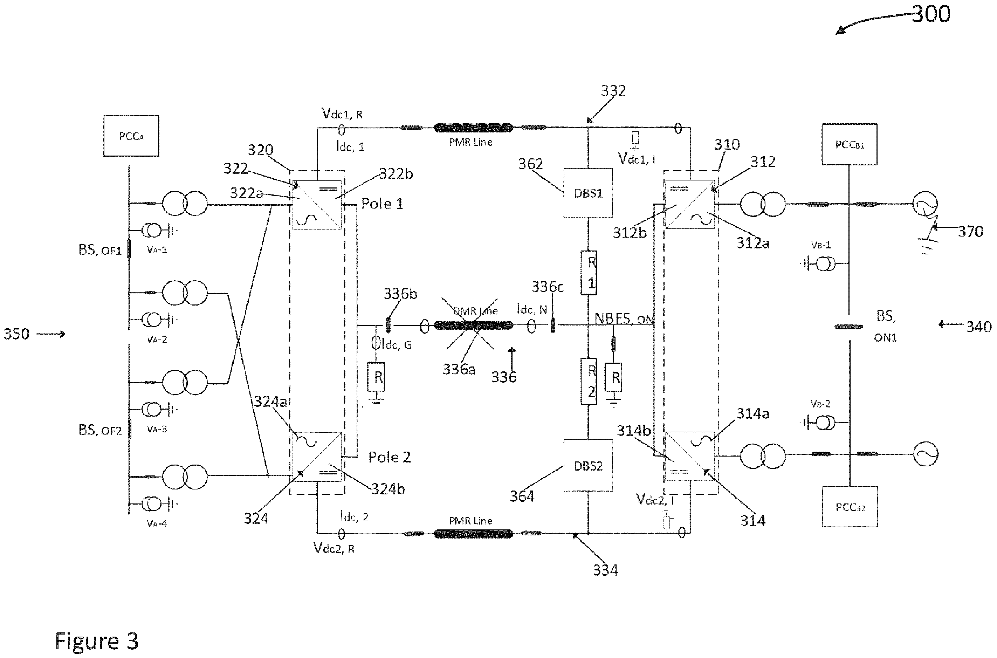

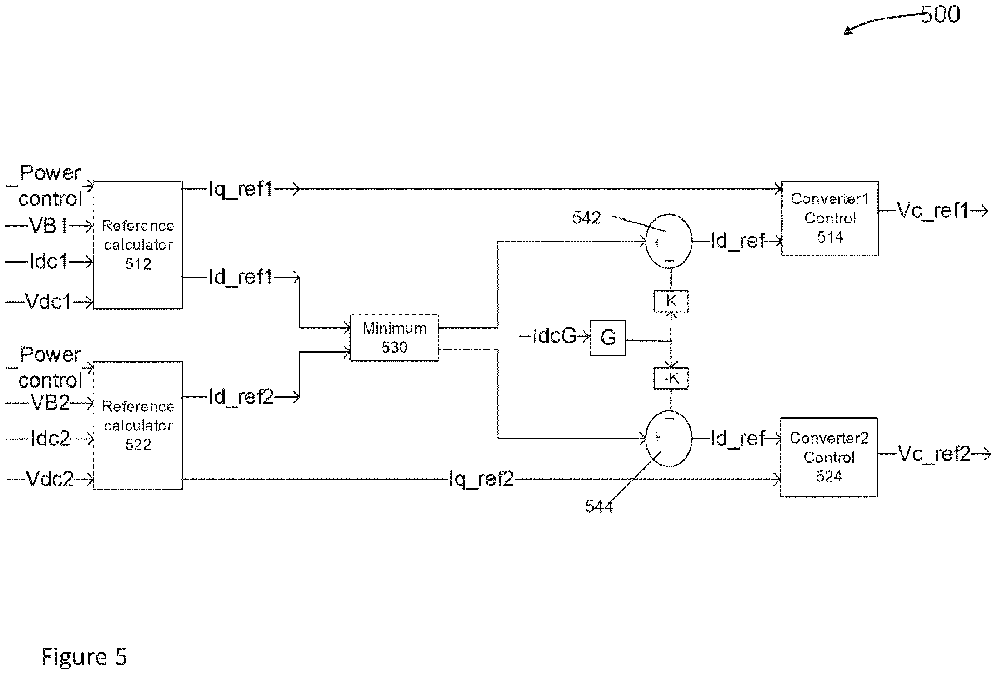

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, to networks such as the network 300 of Figure 3, and to networks operating the control logic 500/method 600/control logic 700 of Figures 5, 6 and 7.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a consumer network, with second AC network 150 being a power generation network, for instance.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The second AC power generation network 150 generates AC power that is provided to second power conversion means 120 at the second AC side 120a. The second power conversion means 120 converts the received AC power to a DC power for transmission to the first power conversion means 110. The DC power is transmitted from the second DC side 120b over the power transmission medium 130 to the first DC side 110b of the first power conversion means 110. The first power conversion means 110 converts the received DC power back to AC power. The AC power is then provided from the first AC side 110a to the first AC network 140 for consumption, for instance. In particular examples, the power conversion means 110 and 120 may be geographically remote. For instance, the first power conversion means 110 may reside onshore and the second power conversion means 120 may reside off-shore with, for instance, a windfarm.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as grid following. The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with over SGFM sources connected to the power transmission network 100.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is shown as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

Figure 3 shows an example of a bipole power transmission network 300 in accordance with aspects of the present disclosure.

The bipole power transmission network 300 comprises a first power conversion means 310. The first power conversion means 310 comprises a first power converter 312 and a second power converter 314. The first power converter 312 has a first AC side 312a and a first DC side 312b. The second power converter 314 has a second AC side 314a and a second DC side 314b.

The bipole power transmission network 300 also comprises a second power conversion means 320. The second power conversion means 320 comprises a third power converter 322 and a fourth power converter 324. The third power converter 322 has a third AC side 322a and a third DC side 322b. The fourth power converter 324 has a fourth AC side 324a and a fourth DC side 324b.

The bipole power transmission network 300 also comprises a first power transmission means 332 electrically connected between the first 312b and third 322b DC sides and defining a first electrical pole (shown also as "Pole 1") having a first DC voltage and a first DC current.

The bipole power transmission network 300 also comprises a second power transmission means 334 electrically connected between the second 314b and fourth 324b DC sides and defining a second electrical pole (shown also as "Pole 2) having a second DC voltage and a second DC current.

A neutral arrangement 336 is also shown as part of the bipole power transmission network 300. The neutral arrangement 336 is connected to the first 312b, second 314b, third 322b and fourth 324b DC sides. The neutral arrangement 336 is shown as comprising a DMR conductor 336a and switchgear 336b, 336c either side of the DMR conductor 336a.

In the bipole power transmission network 300 shown, the first 312a and second 314a AC sides are connected to a first AC system 340. The third 322a and fourth 324a AC sides are connected to a second AC system 350.

The bipole power transmission network 300 also comprises a first DBS 362 connected between the first power transmission means 332 and the neutral arrangement 336. The first DBS 362 is configured to operate to dissipate excess energy from first power transmission means 332 through resistance R1 in response to the first DC voltage on the first power transmission means 332 exceeding a threshold voltage. A second DBS 364 is also shown as being connected between the second power transmission means 334 and the neutral arrangement 336. The second DBS 364 is configured to operate to dissipate excess energy from second power transmission means 334 through resistance R2 in response to the second DC voltage on the second power transmission means 334 exceeding the threshold voltage.

Various other components of the bipole power transmission network 300 such as resistors, grounding points, and surge arrestors would be familiar to the person skilled in the art and will not be described further.

The bipole power transmission network 300 will now be described, by way of example only, in the context of a windfarm interconnection HVDC system. In such an interconnection HVDC system, normally the two poles (Pole 1 and Pole 2) of the bipole power transmission network 300 are fed though independent wind power parks in second AC system 350. Accordingly, they might produce different power outputs depending on wind density in the different wind power parks. This may result in an unbalanced power flow between the two poles and on the first and second power transmission means 332, 334. This tends to cause an unbalanced current, referred to in the present example as the third DC current, to flow through the DMR conductor 336a. The first and second power converters 312, 314 at the onshore converter station (i.e., the first power conversion means 310) may be connected to the same bus or different bus in the first i.e., onshore AC system 340. The first and second power converters 312, 314 may be operated independently in a DC voltage control mode as, for instance, a slack bus. In this circuit configuration (when there is a return path via the DMR conductor 336a for steady state and transient unbalanced current to flow), then in the scenario of AC system ride through faults (such as the grounding fault 370), the first and second converters 312, 314 and respective DBS 362, 364 are operated independently based on the respective voltages (VB1, VB2) measured at the respective PCC (PCCB1, PCCB2). Any unbalanced current through the two poles DBS 362, 364 flows through the DMR (s) 336a.

However, in the scenario indicated in Figure 3, there is a loss of/a fault with, the DMR conductor 336a. In this scenario the HVDC scheme tends to be switched into either a rigid bipole configuration (i.e., one of the first power conversion means 310 and second power conversion means 320 is grounded) or a bipole configuration with both stations grounded (i.e., first power conversion means 310 and second power conversion means 320). In either of the configurations, it is desirable to reduce electrical current flowing in the return path (i.e., through neutral arrangement 336) close to zero. This tends to require a current balancing between the two HVDC poles (i.e., between first power transmission means 332 and second power transmission means 334), for both steady state, and temporary operation, i.e., for AC fault ride through conditions. By way of example, in rigid bipole steady operation (i.e., one of the power conversion means 310, 320 is grounded) the unbalanced electrical current flowing to ground will be zero. However, an unbalance can occur in the first and second DC voltages of the poles 332, 334 which can lead the midpoint of the two poles (which are not grounded) to have non-zero voltage that can damage or overload surge arrestors.

Also, for AC fault ride through conditions with the DMR 336a out of service, the converters 312, 314 cannot be operated independently, and such an operation has to be coordinated between two poles.

For circuit configurations where both stations (both conversion means 310, 320) neutral is grounded, the unbalanced current because of operation of the DBS 362, 364 can trip the scheme 300, depending upon the protection settings. Furthermore, it is also undesirable to have current flowing through ground for seconds during the AC fault ride through event for environmental issues.

In specific circuit configurations where only the offshore station (i.e., power conversion means 320) neutral is grounded, movement of the DC voltage of the mid-point of the electrical poles, away from being near zero, can result in surge arrestors being required to dissipate too much energy necessitating larger and more expensive surge arrestors to be used. The neutral potential of the neutral arrangement 336 can also be raised which can lead to a trip of the complete scheme 300, depending upon the protection settings.

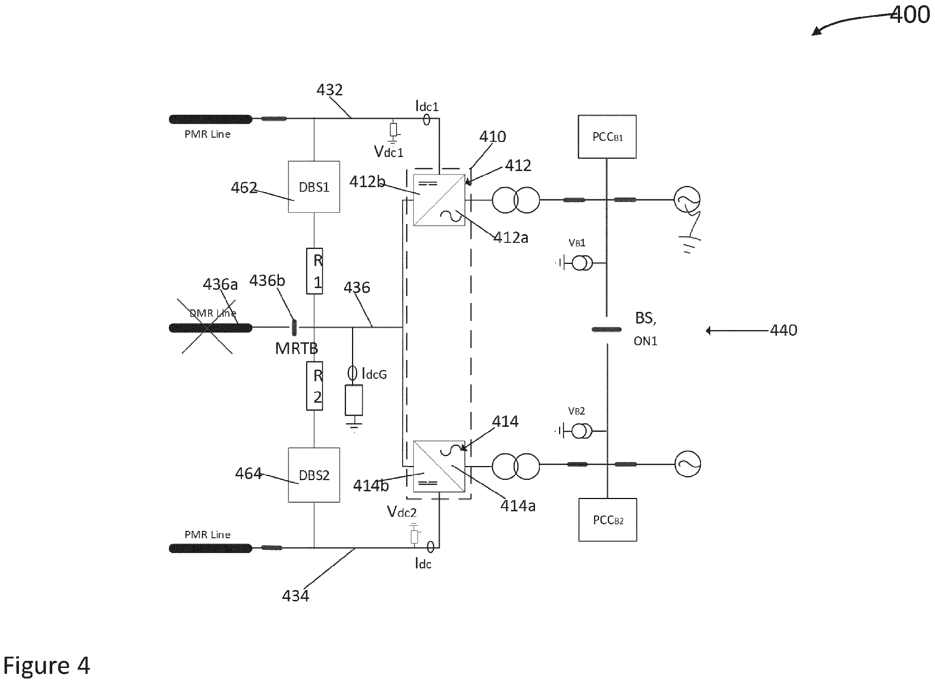

The control methods described herein allow the first and second power converters 312, 314 to be operated in a coordinated manner for the operating configurations where the unbalanced current between the two poles (i.e., between the first power transmission means 332 and the second power transmission means 334) is undesirable. These control methods will now be further described with respect to the simplified circuitry shown in Figure 4.

Figure 4 shows an example of part of the circuitry for a rigid bipole power transmission network 400 in accordance with aspects of the present disclosure. The part the circuitry shown in Figure 4 may be a part of the circuitry shown in Figure 3, for instance, with like reference numerals referring to like features.

A first power conversion means 410 is shown. The first power conversion means 410 comprises a first power converter 412 and a second power converter 414. The first power converter 412 has a first AC side 412a and a first DC side 412b. The second power converter 414 has a second AC side 414a and a second DC side 414b.

The first AC side 412a and the second AC side 414a are connected to a first AC system 440.

The first DC side 412b is connected to a first power transmission means 432 constituting a first electrical pole having a first DC voltage and a first DC current. The second DC side 414b is connected to a second power transmission means 434 constituting a second electrical pole having a second DC voltage and a second DC current.

A neutral arrangement 436 is also shown as being connected to the first DC side 412b and the second DC side 414b. The neutral arrangement 436 comprises a DMR conductor 436a and a switchgear 'MRTB' 436b.

Also shown is a first DBS 462 'DBS1' connected between the first power transmission means 432 and the neutral arrangement 436. The first DBS 462 is configured to operate to dissipate excess energy from the first power transmission means 432 through a resistance R1, in response to the first DC voltage of the first power transmission means 432 exceeding a threshold voltage. A second DBS 464 'DBS2' is also present and shown connected between the second power transmission means 434 and the neutral arrangement 436. The second DBS 464 is configured to operate to dissipate excess energy from the second power transmission means 434 through a resistance R2, in response to the second DC voltage of the second power transmission means 434 exceeding a threshold voltage.

It will be appreciated that the first power transmission means 432, second power transmission means 434 and neutral arrangement 436 are further connected to a second power conversion means when in use. In the figure, only a partial view of the circuitry of a power transmission network 400 is shown.

The first power conversion means 410 may be an onshore converter station, for instance. Accordingly, the first power conversion means 410 may be a receiving station i.e., receiving power via the first 432 and second 434 power transmission means. The first AC system 440 may therefore be a consumer network.

The control methods described herein introduce a function to operate the first 412 and the second 414 power converters of the two electrical poles (i.e., of first power transmission means 432 and second power transmission means 434) in a coordinated manner during the AC fault ride through events. The control methods described herein further introduce a logic to select this function based on a change in DC circuit configuration.

For DC circuit configurations where an unbalanced current between the first and second power transmission means 432, 434 is allowed, the operation of the first and second converters 412, 414 during AC fault ride through is independent based on their respective AC voltages measured at their PCC (PCCa1, PCCa2), and the unbalanced current flow through the DMR 436a return path.

For DC circuit configurations, where the unbalanced current between the first and second power transmission means 432, 434 is not desirable, then selection logic based on the state of the DC side switchgear 436b may select the proposed function, which allow a coordinated operation of the first and second power converters 412, 414 during AC fault ride through, with the objective of minimizing the difference in DC current between the first and second power transmission means 432, 434 to close to zero.

Depending upon the status of the return conductor switchgear (MRTB) 436b, the selection logic may switch the operation of the first and second converters 412, 414 from independent operation to coordinated operation. If the MRTB 436b is opened (nonconducting), hence the unbalanced current is not allowed, then the operation of the first and second converters 412, 414 during AC fault ride through events may be coordinated, with the objective of minimizing the difference in DC current (Idc1 and Idc2 as shown in the Figure 4) close to zero.

For the coordinated operation, at a general level, the first and second converters 412, 414 may be controlled to provide substantially the same active power at their respective first AC side 412a and second AC side 414a. More specifically, an active current reference (for instance, the active current reference 'Id_ref') of the first and second power converters 412, 414 may be controlled, such that the first and second power converters 412, 414 provide substantially the same active power. Such a control methodology may ensure that the difference in DC current between the first power transmission means 432 and the second power transmission means 434, during an AC fault ride through event, is minimised. Hence, the current flowing to ground (i.e., IdcG in Figure 4), is substantially zero or below a threshold. In this case, the output of the DC voltage control of the first and second power converters 412, 414 will be overridden by the new functionality described herein, which can lead to the first DC voltage of the first power transmission means 432 and the second DC voltage of the second power transmission means 434 to go out of range (i.e. over voltage/exceed a threshold voltage) and both the first and second DBS 462, 464 will be activated to dissipate the power on both poles until the fault is cleared (by considering the FRT capability requirements).

In the example shown in Figure 4, it is assumed that the power being fed by the second power conversion means (not shown) i.e., at the offshore converter station is already being controlled using a power balancing function to share fed power equally based on a ground current measured at the offshore converter station.

Figure 5 shows an example of control logic 500 for a controller of a bipole power transmission network in accordance with aspects of the present disclosure. The control logic 500 may be used for the controller shown in Figure 2. The control logic may operate to control features of the power transmission network 300 of Figure 3 or 400 of Figure 4. Features, in particular of Figure 4, may be used to aid the understanding of the interaction of the control logic with components of the bipole power transmission network.

A first reference calculator 512 is shown. The first reference calculator 512 generates a first reference (a first active current reference) and a first reactive current reference for a first converter control 514 of a first power converter 412. The first active current reference in the present example is an active current reference Id_ref1. The first reactive current reference in the present example is a reactive current reference Iq_ref1.

A second reference calculator 522 is shown. The second reference calculator 522 generates a second reference (the second active current reference) and a second reactive current reference for a second converter control 524 of a second power converter 414. The second active current reference in the present example is an active current reference Id_ref2. The second reactive current reference in the present example is a reactive current reference Iq_ref2.

The first reference calculator 512 and the second reference calculator 522 generate the first active current reference and the second active current reference based on one or more of: a power control signal (indicating a disturbance in an AC system 440 necessitating coordination of the first and second converter controls 514, 524); respective voltages measured at the PCC of the first and second converters 412, 414 with the AC system 440 (denoted VB1 and VB2 in Figures 4 and 5); respective DC currents on the first and second power transmission means 432, 434; respective DC voltages, herein also referred to as first and second DC voltages, on the first and second power transmission means 432, 434.

The active current reference Id_ref1 output from the first reference calculator 512, and the active current reference Id_ref 2 output from the second reference calculator 514, are compared and the minimum is chosen at logic component 530. The minimum of the two active current references is provided to both of a first junction 542 and a second junction 544 as a common reference. A first trimming signal is also provided to the first junction 542 and second junction 544 and combined (i.e., added or subtracted) with the common reference. The output of the first junction 542 is provided to the first converter control 514. The output of the second junction 544 is provided to the second converter control 524.

The first converter control 514 generates, based on the received reference, a voltage control reference Vc_ref1 for controlling a first power converter 412. The second converter control 524 generates, based on the received reference, a voltage control reference Vc_ref2 for controlling a second power converter 414.

The first trimming signal may be generated based on a measured ground current IdcG, as shown in Figure 4. Alternatively, the ground current IdcG may be inferred from a calculation of the difference between the first DC current on the first power transmission means 432 and the second DC current on the second power transmission means 434.

To further illustrate the control logic 500, a scenario is presented whereby the first reference, active current reference Id_ref1, is the minimum of the first reference and second reference (i.e., the minimum of the two active current references Id_ref1 and Id_ref2). In this instance, the active current reference Id_ref1 is passed to both of the first junction 542 and the second junction 544. Accordingly, the common reference provided to the first converter control 514 is Id_ref1 (optionally with first trimming signal). However, the common reference provided to the second converter control 524, is also Id_ref2 (optionally with first trimming signal). This is in contrast to the scenario where the coordinated control of the first and second converter controls 514, 524 is not being adopted, and wherein the active current control to the second converter control 524 would be Id_ref2.

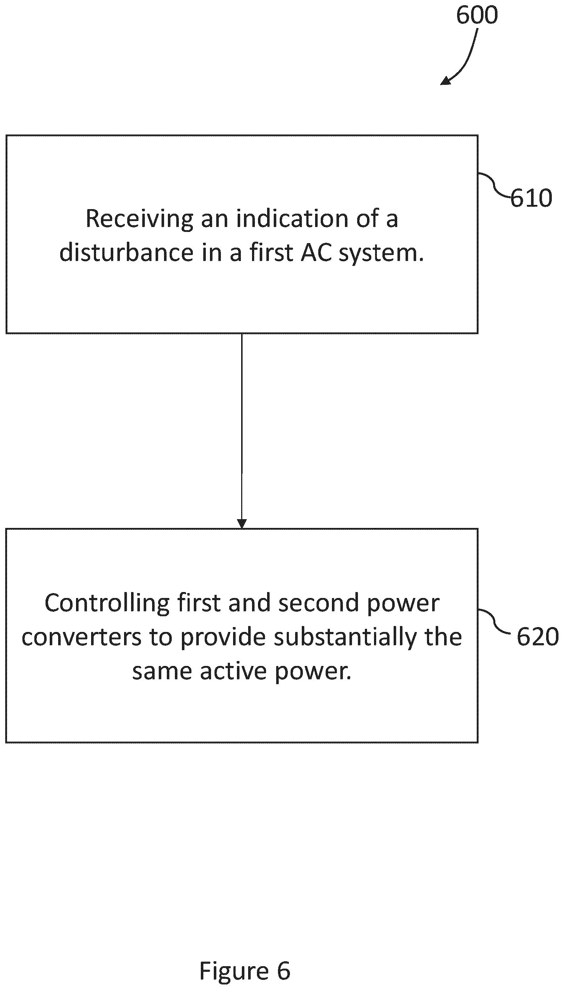

Figure 6 shows an embodiment of a method 400 of controlling a bipole power transmission network. The bipole power transmission network may be the network 300 or 400, for instance.

A step 610 comprises, receiving an indication of a disturbance in a first AC system 340, 440.

A further step 620 comprises controlling first 312, 412 and second 314, 414 power converters to provide substantially the same active power at their respective first and second AC sides.

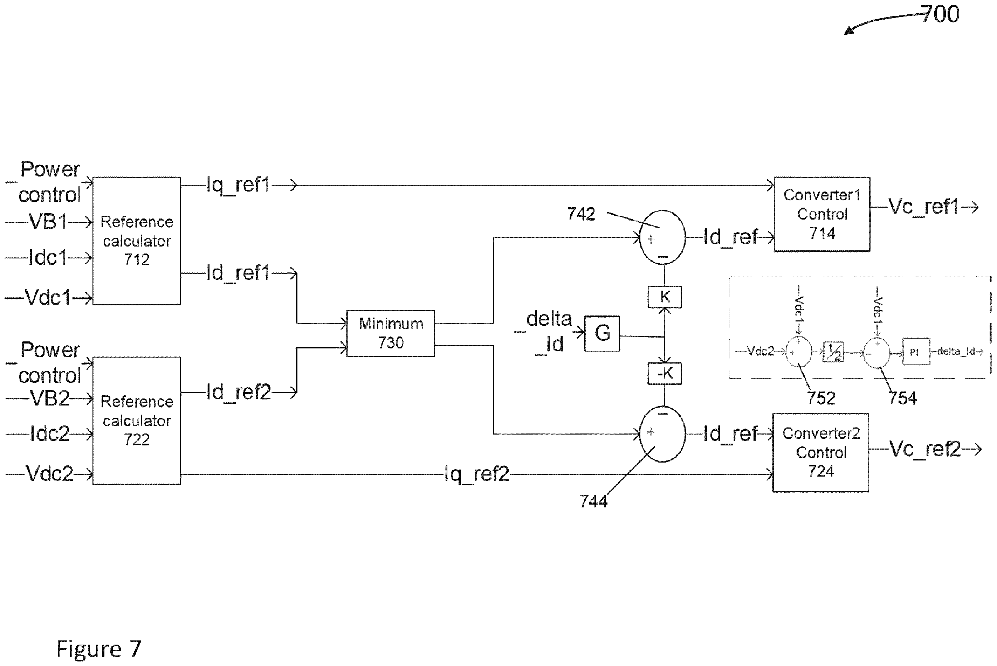

Figure 7 shows an example of control logic 700 for a controller of a bipole power transmission network with one converter station grounded, in accordance with aspects of the present disclosure.

The control logic 700 may be used for the controller shown in Figure 2. The control logic may operate to control features of the power transmission network 300 of Figure 3 or 400 of Figure 4.

A first reference calculator 712 is shown. The first reference calculator 712 generates a first reference (a first active current reference) and a first reactive current reference for a first converter control 714 of a first power converter 412. The first active current reference in the present example is an active current reference Id_ref1. The first reactive current reference in the present example is a reactive current reference Iq_ref1.

A second reference calculator 722 is shown. The second reference calculator 722 generates a second reference (a second active current reference) and a second reactive current reference for a second converter control 724 of a second power converter 414. The second active current reference in the present example is an active current reference Id_ref2. The second reactive current reference in the present example is a reactive current reference Iq_ref2.

The first reference calculator 712 and the second reference calculator 722 generate the first and second active current references based on one or more of: a power control signal (indicating a disturbance in an AC system 440 necessitating coordination of the first and second converter controls 714, 724); respective voltages measured at the PCC of the first and second converters 412, 414 with the AC system 440 (denoted VB1 and VB2 in Figures 4 and 7); respective DC currents on the first and second power transmission means 432, 434; respective DC voltages, herein also referred to as first and second DC voltages, on the first and second power transmission means 432, 434.

The first reference (active current reference Id_ref1) output from the first reference calculator 712, and the second reference (active current reference Id_ref 2) output from the second reference calculator 714, are compared and the minimum is chosen at logic component 730. The minimum of the first and second references (i.e., of the two active current references) is provided to both of a first junction 742 and a second junction 744 as a common reference. A second trimming signal is also provided to the first junction 742 and second junction 744 and combined (i.e., added or subtracted) with the common reference. The output of the first junction 742 is provided as the reference to the first converter control 714. The output of the second junction 744 is provided as the reference to the second converter control 724.

The first converter control 714 generates, based on the received reference, a voltage control reference Vc_ref1 for controlling a first power converter 412. The second converter control 724 generates, based on the received reference, a voltage control reference Vc_ref2 for controlling a second power converter 414.

The second trimming signal may be generated based on the parameter shown as delta_Id. The parameter delta_Id is determined by combining the first DC voltage Vdc1 and the second DC voltage Vdc2 at a further junction 752. The output of further junction 752 is divided by 2, with the difference between this halved value and the first DC voltage Vdc1 determining at further junction 754. The value output from further junction 754 forms the basis for delta_Id.

Expressed differently, in a rigid bipole (i.e., with single converter station grounded), the ground current will always be zero. The issue of unbalance will be in the DC voltages of the electrical poles which can lead the mid-point of the two poles, which are not grounded, to be non-zero, leading to damage or overload of surge arresters. A control action tends to be needed to balance the power sent in both poles to ensure they stay equal and an additional function, the second trimming signal, is used in addition to the current order Id_ref to regulate the DC voltage of each of the poles so as not to drift away from the average voltage between two poles. Accordingly, the second trimming signal can be expressed as being a function of the difference between Vdc1 and |Vdc1|+|Vdc2|)/2, or the difference between Vdc2 and |Vdc1|+|Vdc2|)/2.

Whilst the embodiments described herein may indicate the use of an active current reference to coordinate the control of first and second power converters, this is not intended to be limiting. For example, the active current reference may be used in, for instance, Grid following approaches, but alternatively a phase angle and/or magnitude may be used in SGFM approaches.

Whilst the examples described herein may generate a first trimming signal based on a measured DC current in the neutral arrangement, it will be understood that the DC current in the neutral current may be a ground current, a current through a surge arrestor to ground, or another neutral current. Furthermore, the first trimming signal may be based on the difference between DC currents on the first and second electrical poles (i.e., on the first power transmission means and the second power transmission means). The second trimming signal may be generated based on the first and second DC voltages (i.e., as a function of DC voltage drift).

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein, generally, provides a method of controlling a bipole power transmission network, the method comprising: receiving an indication of a disturbance in a first AC system; and then controlling first and second power converters of the bipole power transmission network to provide substantially the same active power at their respective first and second AC sides to the first AC system, such that a first DC voltage of a first electrical pole of the bipole power transmission network and a second DC voltage of a second electrical pole of the bipole power transmission network are substantially the same as each other, and such that a DC current flowing in a neutral arrangement of the bipole power transmission network can be regulated substantially to zero.

The disclosure herein also provides a controller for a bipole HVDC transmission system that controls the active current references of the first and second power converters in such a way that it causes DC voltage to exceed the activation threshold for both the dynamic braking systems, thus making the dynamic braking systems contribute to reducing the difference in DC currents during the AC fault ride through event.

## Claims

1. A computer-implemented method of controlling a bipole power transmission network, the bipole power transmission network comprising a first power conversion means comprising first and second power converters having respective first and second alternating current 'AC' sides and respective first and second direct current 'DC' sides, a second power conversion means comprising third and fourth power converters having respective third and fourth AC sides and respective third and fourth DC sides, a first power transmission means electrically connected between the first and third DC sides and defining a first electrical pole having a first DC voltage and a first DC current, a second power transmission means electrically connected between the second and fourth DC sides and defining a second electrical pole having a second DC voltage and a second DC current, wherein the first and second AC sides are connected to a first AC system, wherein the third and fourth AC sides are connected to a second AC system, the method comprising:
receiving an indication of a disturbance in the first AC system; and then
controlling the first and second power converters to provide substantially the same active power at their respective first and second AC sides.

2. The computer-implemented method of claim 1, wherein the bipole power transmission network comprises a first DBS connected to the first electrical pole, the first DBS being responsive to the first DC voltage of the first electrical pole exceeding a threshold voltage, wherein the bipole power transmission network further comprises a second DBS connected to the second electrical pole, the second DBS being responsive to the second DC voltage of the second electrical pole exceeding the threshold voltage, such that the step of controlling the first and second power converters coordinates the operation of the first DBS and the second DBS by coordinating the active power of the first and second power converters.

3. The computer-implemented method of any one of the preceding claims, wherein receiving the indication of the disturbance in the first AC system comprises at least one of:
receiving a measurement of an AC electrical quantity of the first AC system; and
receiving a power control signal.

4. The computer-implemented method of any one of the preceding claims, wherein controlling the first and second power converters comprises:
determining a common reference for controlling the first and second power converters; and
providing, to the first and second power converters, the common reference.

5. The computer-implemented method of claim 4, wherein controlling the first and second power converters further comprises:
receiving, from a first controller of the first power converter, a first reference for controlling the first power converter;
receiving, from a second controller of the second power converter, a second reference for controlling the second power converter;
selecting, from the first reference and the second reference, a selected reference, wherein the selected reference is the lower of the first reference and the second reference; and
providing, to the first and second power converters, the selected reference as the common reference for controlling the first and second power converters.

6. The computer-implemented method of any one of claims 4-5, wherein the common reference is:
an active current reference; or
a magnitude and/or phase angle.

7. The computer-implemented method of any one of claims 4-6, wherein the bipole power transmission network comprises a neutral arrangement connected to the first, second, third and fourth DC sides, wherein controlling the first and second power converters further comprises:
determining a third DC current in the neutral arrangement;
generating, based on the third DC current, a first trimming signal for combining with the common reference to regulate the third DC current substantially to zero; and
combining the first trimming signal with the common reference for providing to the first and second power converters.

8. The computer-implemented method of claim 7, wherein the determining the third DC current in the neutral arrangement comprises:
measuring the third DC current; or
measuring the first and second DC currents of the first electrical pole and second electrical pole, and determining the third DC current in the neutral arrangement as the difference between the first and second DC currents.

9. The computer-implemented method of any one of claims 4-6, wherein controlling the first and second power converters further comprises:
generating, based on the first DC voltage of the first electrical pole and the second DC voltage of the second electrical pole, a second trimming signal for combining with the common reference to regulate a difference between the first DC voltage and the second DC voltage substantially to zero; and
combining the second trimming signal with the common reference for providing to the first and second power converters.

10. The computer-implemented method of any one of the preceding claims, wherein the second AC system comprises a power generation network, optionally a renewable power generation network, optionally one or more windfarms.

11. The computer-implemented method of any one of the preceding claims, wherein the first power conversion means comprises an onshore converter station and the second power conversion means comprises an offshore converter station.

12. The computer-implemented method of any one of the preceding claims, wherein the power transmission network is a high voltage DC, HVDC, power transmission network.

13. The computer implemented method of any one of the preceding claims, further comprising:
determining a status of a switchgear of the neutral arrangement; and then
if the status indicates the switchgear is open, controlling the first and second power converters to provide substantially the same active power at their respective first and second AC sides.

14. A controller for controlling a bipole power transmission network, the bipole power transmission network comprising a first power conversion means comprising first and second power converters having respective first and second AC sides and respective first and second DC sides, a second power conversion means comprising third and fourth power converters having respective third and fourth AC sides and respective third and fourth DC sides, a first power transmission means electrically connected between the first and third DC sides and defining a first electrical pole having a first DC voltage and a first DC current, a second power transmission means electrically connected between the second and fourth DC sides and defining a second electrical pole having a second DC voltage and a second DC current, wherein the first and second AC sides are connected to a first AC system, wherein the third and fourth AC sides are connected to a second AC system, the controller comprising:
a memory; and
at least one processor;
wherein the memory comprises computer-readable instructions which when executed by the at least one processor cause the controller to:
receive an indication of a disturbance in the first AC system; and then
control the first and second power converters to provide substantially the same active power at their respective first and second AC sides.

15. A bipole power transmission network comprising:
a first power conversion means comprising first and second power converters having respective first and second AC sides and respective first and second DC sides;
a second power conversion means comprising third and fourth power converters having respective third and fourth AC sides and respective third and fourth DC sides;
a first power transmission means electrically connected between the first and third DC sides and defining a first electrical pole having a first DC voltage and a first DC current;
a second power transmission means electrically connected between the second and fourth DC sides and defining a second electrical pole having a second DC voltage and a second DC current;
wherein the first and second AC sides are connected to a first AC system;
wherein the third and fourth AC sides are connected to a second AC system; and
the controller of claim 14**.**
